# EUROPÄISCHE PATENTSCHRIFT

(11) **EP 2 935 936 B1**
(45) Veröffentlichungstag und Bekanntmachung des Hinweises auf die Patenterteilung: **12.02.2020**
(21) Anmeldenummer: 13807932.2
(22) Anmeldetag: 09.12.2013
(51) Int. Cl.: F16F 15/14

(54) **FLIEHKRAFTPENDELEINRICHTUNG SOWIE ANTRIEBSSTRANG EINES KRAFTFAHRZEUGS**
CENTRIFUGAL FORCE PENDULUM DEVICE, AND DRIVE TRAIN OF A MOTOR VEHICLE
DISPOSITIF DE PENDULE À FORCE CENTRIFUGE ET CHAÎNE CINÉMATIQUE D'UN VÉHICULE AUTOMOBILE

(30) Priorität: 22.12.2012 DE 102012025327
(43) Veröffentlichungstag der Anmeldung: 28.10.2015
(73) Patentinhaber: Audi AG, 85045 Ingolstadt (DE)
(72) Erfinder: MEYER, Herbert, 93055 Regensburg (DE); SCHULZE, Sebastian, 85092 Kösching (DE)
(74) Vertreter: Lehle, Josef
(86) Internationale Anmeldenummer: PCT/EP2013/003718
(87) Internationale Veröffentlichungsnummer: WO 2014/095000

(56) Entgegenhaltungen:
- DE-A1-102010 049 553
- US-A1- 2011 180 358

## Beschreibung

Die Erfindung betrifft eine Fliehkraftpendeleinrichtung mit einem um eine Drehachse drehbaren Pendelmassenträger sowie wenigstens einer Pendelmasse, die entlang einer Laufbahn beweglich zwischen zwei bezüglich der Drehachse in Umfangsrichtung voneinander beabstandeten Endanschlägen an dem Pendelmassenträger gelagert ist, sowie mit einer Federeinrichtung, die dazu ausgebildet ist, die Pendelmasse bei einer eine Grenzdrehzahl unterschreitenden Drehzahl des Pendelmassenträgers um die Drehachse in einen der Endanschläge zu drängen, wobei die Laufbahn derart ausgestaltet ist, dass die Pendelmasse bei Anliegen an einem der Endanschläge bezüglich der Drehachse in einer ersten Radialposition und beabstandet von den Endanschlägen in einer zweiten, größeren Radialposition vorliegt. Dabei weist die Federeinrichtung ein Federelement mit einem Kontaktbereich auf, wobei das Federelement derart ausgebildet ist, das der Kontaktbereich bei der die Grenzdrehzahl unterschreitenden Drehzahl in Richtung einer Radialhalteposition gedrängt wird, um die Pendelmasse mit einer in Richtung einer ersten Radialposition weisenden Federkraft zu beaufschlagen, und bei einer Drehzahl, die größer oder gleich der Grenzdrehzahl ist, durch Fliehkrafteinfluss in einer Radialfreigabeposition vorliegt. Die Erfindung betrifft weiterhin einen Antriebsstrang eines Kraftfahrzeugs.

Eine derartige Fliehkraftpendeleinrichtung wird beispielsweise in dem Antriebsstrang des Kraftfahrzeugs verwendet, um Drehschwingungen, die von einem Antriebsaggregat des Antriebsstrangs, insbesondere einer Brennkraftmaschine, angeregt werden, zumindest teilweise, vorzugsweise vollständig, zu tilgen. Die Fliehkraftpendeleinrichtung dient demnach als Schwingungstilger. Im Gegensatz zu anderen Schwingungstilgern kann sie in einem weiten Drehzahlbereich auf eine bestimmte Ordnung abgestimmt werden. Das Grundprinzip ist dabei die Ausnutzung der Fliehkraft, die bei Vorliegen einer bestimmten Drehzahl des Pendelmassenträgers um die Drehachse auf die Pendelmasse wirkt, als rückstellende Kraft auf den Schwingungsmechanismus, also insbesondere auf die Pendelmasse. Die Fliehkraft verursacht beispielsweise eine Verlagerung der Pendelmasse bezüglich des Pendelmassenträgers entlang der Laufbahn beziehungsweise bewirkt eine in Umfangsrichtung wirkende Kraft. Auf diese Art und Weise wird die Bewegung der Pendelmasse über einen Schwingwinkel der Fliehkraftpendeleinrichtung beeinflusst.

Bei niedrigen Drehzahlen des Pendelmassenträgers ist die auf die Pendelmasse wirkende stabilisierende Fliehkraft derart gering, dass die Pendelmasse zwischen den Endanschlägen hin und her schlagen kann. Dies führt üblicherweise zu einer unerwünschten Geräuschbildung. Hinzu kommt, dass bei entsprechender Anordnung der Fliehkraftpendeleinrichtung die Pendelmasse durch die Schwerkraft beeinflusst wird. Beispielsweise verursacht dieser Schwerkrafteinfluss, dass die Pendelmasse bei jeder Umdrehung des Pendelmassenträgers von einem der Endanschläge zu dem gegenüberliegenden der Endanschläge fällt. Bedingt durch den dabei jeweils auftretenden Aufprall an dem Endanschlag entstehen Geräusche, welche störend wirken können und daher grundsätzlich unerwünscht sind. Um dieser Problematik zu begegnen, haben Fliehkraftpendeleinrichtungen häufig Dämpfungselemente aus einem elastischen Material, welche an den Endanschlägen zum Dämpfen des Aufpralls der Pendelmasse angeordnet sind. Aus dem Dokument US2011/180358 ist eine Fliehkraftpendeleinrichtung bekannt, bei welcher eine unerwünschte Geräuschbildung dadurch vermieden wird, dass die Pendelmasse durch ein Federelement an einem Endanschlag zum Anliegen gebracht wird.

Es ist nun Aufgabe der Erfindung, eine Fliehkraftpendeleinrichtung vorzuschlagen, welche die Geräuschbildung während des Betriebs der Fliehkraftpendeleinrichtung auch bei geringen Drehzahlen weiter beziehungsweise wirkungsvoller verringert als bekannte Maßnahmen, beispielsweise die erwähnten Dämpfungselemente.

Dies wird erfindungsgemäß mit einer Fliehkraftpendeleinrichtung mit den Merkmalen des Anspruchs 1 erzielt. Dabei ist vorgesehen, dass das Federelement in Umfangsrichtung gesehen beidseitig des Kontaktbereichs an dem Pendelmassenträger gelagert ist.

Grundsätzlich ist die Federeinrichtung vorgesehen, die dazu ausgebildet ist, die Pendelmasse bei einer eine Grenzdrehzahl unterschreitenden Drehzahl des Pendelmassenträgers um die Drehachse in einen der Endanschläge zu drängen. Die Pendelmasse wird also an einer Bewegung gehindert, bis der Pendelmassenträger eine Drehzahl um die Drehachse erreicht hat, welche vorzugsweise ausreichend ist, um die Pendelmasse durch Fliehkrafteinfluss zu stabilisieren. Eine derartige Eigenstabilisierung liegt vor, wenn die Drehzahl die Grenzdrehzahl erreicht beziehungsweise überschritten hat. Die Grenzdrehzahl ist dabei entsprechend der Ausgestaltung der Fliehkraftpendeleinrichtung beziehungsweise der Pendelmasse gewählt. Bei Vorliegen einer Drehzahl, welche kleiner ist als die Grenzdrehzahl, wird üblicherweise die tilgende Wirkung der Fliehkraftpendeleinrichtung nicht benötigt. Insoweit ist das Blockieren der Bewegung der Pendelmasse entlang der Laufbahn nicht nachteilig.

Das Drängen der Pendelmasse in einen der Endanschläge gewährleistet ein zuverlässiges Festsetzen der Pendelmasse, welche keine, auch keine zufällige, Verlagerung der Pendelmasse zulässt. Dies liegt darin begründet, dass der Endanschlag, an welchem die Pendelmasse anliegt, starr ist und mithin keine weitere Verlagerung in Richtung des Endanschlags beziehungsweise über den Endanschlag hinaus zulässt. Gleichzeitig bewirkt die Federeinrichtung eine Federkraft, welche die Pendelmasse in Richtung des Endanschlags drängt. Diese ist dabei bevorzugt derart bemessen, dass auch keinerlei Verlagerung der Pendelmasse aus dem Endanschlag heraus auftreten kann. Alternativ oder zusätzlich können weitere Mittel vorgesehen sein, um ein derartiges Festsetzen in dem Endanschlag zu bewerkstelligen. Selbstverständlich können die vorstehend beschriebenen Dämpfungselemente zusätzlich vorgesehen sein, um die Geräuschbildung der Fliehkraftpendeleinrichtung während ihres Betriebs noch weiter zu reduzieren.

Vorzugsweise ist die Federeinrichtung dazu ausgebildet, die Pendelmasse freizugeben, insbesondere vollständig freizugeben, wenn die Drehzahl des Pendelmassenträgers um die Drehachse die Grenzdrehzahl erreicht oder überschreitet. Insoweit wird die Pendelmasse dann nicht mehr in Richtung des Endanschlags beziehungsweise in den Endanschlag gedrängt, sodass er sich nachfolgend entlang der Laufbahn bewegen kann. Im Falle des vollständigen Freigebens wird ab dem Erreichen der Grenzdrehzahl kein Einfluss von der Federeinrichtung auf die Pendelmasse mehr ausgeübt. Diese kann sich also völlig ungehindert entlang der Laufbahn bewegen. Dies hat den Vorteil, dass die Auslegung und Abstimmung der Pendelmasse deutlich vereinfacht wird, weil keine von dem Federelement bewirkten Effekte berücksichtigt werden müssen.

Erfindungsgemäß ist vorgesehen, dass die Laufbahn derart ausgestaltet ist, dass die Pendelmasse bei Anliegen an einem der Endanschläge bezüglich der Drehachse in einer ersten Radialposition vorliegt und beabstandet von den Endanschlägen in einer zweiten, größeren Radialposition vorliegt. Wie bereits erläutert, kann sich die Pendelmasse, soweit sie nicht von der Federeinrichtung in einen der Endanschläge gedrängt ist, entlang der Laufbahn bewegen, welche sich zwischen den Endanschlägen erstreckt, also an jedem Ende von einem der Endanschläge begrenzt ist. Die Laufbahn ist nun auf die genannte Art und Weise ausgestaltet. Die erste Radialposition liegt dabei näher an der Drehachse des Pendelmassenträgers als die zweite Radialposition, welche insoweit größer beziehungsweise weiter außen gelegen ist. Bewegt sich nun die Pendelmasse entlang der Laufbahn, so weist sie beabstandet von den Endanschlägen stets die zweite Radialposition auf, welche größer ist als die erste Radialposition. Die beschriebene zweite Radialposition ist also kein konstanter Wert, sondern verändert sich üblicherweise über die Umfangsposition der Pendelmasse bezüglich des Pendelmassenträgers.

In einer vorteilhaften Ausgestaltung der Erfindung ist vorgesehen, dass die Federeinrichtung die Pendelmasse bei der die Grenzdrehzahl unterschreitenden Drehzahl in radialer Richtung nach innen, insbesondere in die erste Radialposition, drängt. Die Federeinrichtung bewirkt in diesem Fall also eine Federkraft, welche in radialer Richtung nach innen gerichtet ist. Zusammen mit der vorstehend beschriebenen Ausgestaltung der Laufbahn, gemäß welcher die in den Endanschlägen vorliegende erste Radialposition über die Laufbahn hinweg die kleinste Radialposition ist, ergibt sich somit eine Kraft auf die Pendelmasse in Richtung von einem der Endanschläge. Besonders vorteilhaft ist es daher selbstverständlich, wenn die Federeinrichtung bei entsprechend kleiner Drehzahl des Pendelmassenträgers die Pendelmasse bis in die erste Radialposition drängt, in welcher die Pendelmasse automatisch an einem der Endanschläge anliegt. Die Laufbahn ist dazu vorzugsweise mit einem stetigen Verlauf und mit einer ausreichend großen Steigung ausgebildet, sodass bei Aufprägung der Federkraft auf die Pendelmasse durch die Federeinrichtung automatisch die Verlagerung der Pendelmasse in Richtung von einem der Endanschläge abläuft.

Erfindungsgemäß ist vorgesehen, dass die Federeinrichtung ein Federelement mit einem Kontaktbereich aufweist, wobei das Federelement derart ausgebildet ist, dass der Kontaktbereich bei der die Grenzdrehzahl unterschreitenden Drehzahl in Richtung einer Radialhalteposition gedrängt wird, um die Pendelmasse mit einer in Richtung der ersten Radialposition weisenden Federkraft zu beaufschlagen, und bei einer Drehzahl, die größer oder gleich der Grenzdrehzahl ist, durch Fliehkrafteinfluss in einer Radialfreigabeposition vorliegt. Die Federeinrichtung besteht zumindest aus dem wenigstens einen Federelement. Dieses verfügt über den Kontaktbereich, welcher zur Aufprägung einer Kraft auf die Pendelmasse mit einem an dieser vorliegenden Gegenkontaktbereich durch entsprechende Verlagerung des Kontaktbereichs in Berührkontakt gebracht werden kann. Das Federelement, insbesondere dessen Federkonstante, ist auf die Grenzdrehzahl abgestimmt. Unterschreitet die Drehzahl des Pendelmassenträgers diese Grenzdrehzahl, so soll der Kontaktbereich die Radialhalteposition einnehmen oder sich zumindest in Richtung dieser Radialhalteposition bewegen. Sobald der Kontaktbereich des Federelements mit dem Gegenkontaktbereich der Pendelmasse in Berührkontakt tritt, wird die Pendelmasse von der Federkraft des Federelements gemeinsam mit dem Kontaktbereich in Richtung der ersten Radialposition gedrängt. Liegt der Kontaktbereich in der Radialhalteposition vor, so hat die Pendelmasse die erste Radialposition erreicht und liegt mithin an dem Endanschlag an.

Weist dagegen der Pendelmassenträger die Drehzahl auf, welche größer oder gleich der Grenzdrehzahl ist, so soll das Federelement eine Verlagerung des Kontaktbereichs zulassen beziehungsweise bewirken, nach welcher der Kontaktbereich in der Radialfreigabeposition angeordnet ist. Diese ist vorzugsweise derart gewählt, dass der Kontaktbereich in keiner Stellung der Pendelmasse beziehungsweise des Pendelmassenträgers mit der Pendelmasse beziehungsweise ihrem Gegenkontaktbereich in Berührkontakt tritt. Entsprechend wird die Pendelmasse bei Anordnung des Kontaktbereichs in der Radialfreigabeposition nicht mehr durch die Federeinrichtung in ihrer Bewegung beeinträchtigt. Dies ist insbesondere von Bedeutung, weil jeglicher Einfluss auf die Pendelmasse ihre Bewegung, welche stark von Reibung abhängig ist, behindert. Durch die vorstehend beschriebene Ausgestaltung der Fliehkraftpendeleinrichtung wird die, auch nur zeitweilige, Anordnung von zusätzlichen Elementen an der Pendelmasse vermieden, sodass bei ausreichend hoher Drehzahl des Pendelmassenträgers stets eine unbeeinflusste Verlagerung der Pendelmasse und mithin eine Schwingungstilgung mit hoher Güte erfolgen kann.

In einer weiteren Ausgestaltung der Erfindung ist vorgesehen, dass der Kontaktbereich ein Rastelement und die Pendelmasse wenigstens ein Rastgegenelement aufweist, die zumindest bei Vorliegen des Kontaktbereichs in der Radialhalteposition zum Festsetzen der Pendelmasse bezüglich des Pendelmassenträgers in Umfangsrichtung formschlüssig miteinander zusammenwirken. Der vorstehend beschriebene Kontaktbereich sowie der Gegenkontaktbereich sind zunächst üblicherweise lediglich zum Aufprägen einer in Richtung der ersten Radialposition gerichteten Kraft auf die Pendelmasse ausgebildet. Es findet keine Kraftübertragung in Umfangsrichtung bezüglich der Drehachse des Pendelmassenträgers statt. Eine solche wird jedoch durch das Vorsehen des Rastelements an dem Kontaktbereich und dem Rastgegenelement an der Pendelmasse beziehungsweise dem Gegenkontaktbereich erzielt.

Beispielsweise liegt das Rastelement in Form eines Vorsprungs und das Rastgegenelement in Form einer an den Rastvorsprung formangepassten Rastaufnahme vor. Es ist nun vorgesehen, dass spätestens bei Erreichen der Radialhalteposition durch den Kontaktbereich sowie der ersten Radialposition durch die Pendelmasse das Rastelement mit dem Rastgegenelement rastend zusammenwirkt. Dazu greifen die beiden Elemente formschlüssig ineinander. Somit sind das Rastelement und das Rastgegenelement derart ausgestaltet, dass nun nicht lediglich die in Richtung der ersten Radialposition weisende Federkraft auf die Pendelmasse aufgeprägt wird, sondern zusätzlich auch das Festsetzen der Pendelmasse in Umfangsrichtung bewirkt ist. Das bedeutet, dass ab dem Erreichen des Endanschlags durch die Pendelmasse, während der Kontaktbereich in der Radialhalteposition vorliegt, ein zuverlässiges Halten der Pendelmasse an beziehungs-weise in dem Endanschlag realisiert ist.

Dabei kann es vorgesehen sein, dass die Pendelmasse mehrere Rastgegenelemente aufweist, wobei jedem Endanschlag eines dieser Rastgegenelemente zugeordnet ist. Diese Ausführungsform ist besonders vorteilhaft, weil in jedem Endanschlag ein zuverlässiges Halten der Pendelmasse gewährleistet ist, ohne dass die Federeinrichtung eine Federkraft bewirken muss, welche ausreichend groß bemessen ist, um alle auf die Pendelmasse wirkenden Kräfte auszugleichen beziehungsweise ihnen entgegenzuwirken. Vielmehr reicht es aus, wenn die Federeinrichtung die Pendelmasse einmal in einen der Endanschläge drängt, damit nachfolgend das formschlüssige Halten der Pendelmasse in diesem gewährleistet ist. Dabei wirkt das Rastelement formschlüssig mit dem, dem jeweiligen Endanschlag zugeordneten Rastgegenelement zusammen.

Eine Weiterbildung der Erfindung sieht für zumindest eine Ausführungsform vor, dass das Rastelement und das Rastgegenelement derart angeordnet sind, dass sie formschlüssig zum Halten der Pendelmasse miteinander zusammenwirken, wenn der Kontaktbereich in der Radialhalteposition angeordnet ist und die Pendelmasse an dem, dem Rastgegenelement zugeordneten Endanschlag anliegt. Dies ist besonders vorteilhaft dann der Fall, wenn wie vorstehend jedem Endanschlag eines von mehreren Rastgegenelementen zugeordnet ist.

In einer bevorzugten Ausführungsform der Erfindung kann zudem vorgesehen sein, dass das Federelement ein den Fliehkrafteinfluss bewirkendes Gewicht aufweist, wobei der Kontaktbereich und/oder das Rastelement an dem Gewicht ausgebildet sind/ist. Das Gewicht kann dabei das Federelement selbst sein oder als zusätzliches, also separates, das Gewicht bewirkendes Element vorliegen. Letzteres ist vorzugsweise materialuneinheitlich zu dem Federelement ausgeführt, kann jedoch auch aus demselben Material bestehen. Das Federelement und das Gewicht sind derart aufeinander abgestimmt, dass bei Erreichen der Grenzdrehzahl durch die Drehzahl des Pendelmassenträgers die Pendelmasse freigegeben wird, insbesondere vollständig freigegeben wird. Bevorzugt liegen nun der Kontaktbereich und/oder das Rastelement an dem Gewicht vor. Insbesondere kann das Gewicht selbst das Rastelement darstellen, welches bei entsprechender Anordnung wenigstens bereichsweise mit dem Rastgegenelement zusammenwirkt, beispielsweise in dieses eingreift. Beispielsweise kann das Gewicht in Form einer Kugel ausgestaltet sein, während das Rastgegenelement als halbkugelförmige, an die Abmessungen der Kugel angepasste Vertiefung vorliegt.

Schließlich kann vorgesehen sein, dass das Federelement in Umfangsrichtung gesehen beidseitig des Kontaktbereichs an dem Pendelmassenträger drehbar gelagert ist: Auf diese Weise wird eine besonders hohe Stabilität und zudem eine gleichmäßige Kraftbeaufschlagung der Pendelmasse erzielt. Die Lagerung kann eine starre Befestigung des Federelements an dem Pendelmassenträger sein. Alternativ ist jedoch eine Lagerung derart vorgesehen, dass das Federelement wenigstens in geringem Umfang bezüglich des Pendelmassenträgers verlagerbar, insbesondere drehbar, ist, beispielsweise im Sinne eines Festlagers. Auf diese Weise wird ein ausreichendes Spiel bereitgestellt, um mithilfe des Federelements sowohl das Festsetzen der Pendelmasse im Bereich der Endanschläge als auch das vorzugsweise vollständige Freigeben der Pendelmasse zu erzielen.

Die Erfindung betrifft weiterhin einen Antriebsstrang eines Kraftfahrzeugs mit einem Antriebsaggregat und wenigstens einen mittels des Antriebsaggregats antreibbaren Rad. Dabei ist eine Fliehkraftpendeleinrichtung nach einem oder mehreren der vorhergehenden Ansprüche vorgesehen. Die Fliehkraftpendeleinrichtung ist besonders bevorzugt permanent mit dem Rad wirkverbunden. Auf die Vorteile einer derartigen Ausgestaltung wurde bereits eingegangen. Der Antriebsstrang sowie die Fliehkraftpendeleinrichtung können gemäß den vorstehenden Ausführungen weitergebildet sein, sodass insoweit auf diese verwiesen wird.

Bei Antriebssträngen mit bekannten Fliehkraftpendeleinrichtungen ist letztere permanent mit dem Antriebsaggregat, beispielsweise einer Brennkraftmaschine oder dergleichen, wirkverbunden, liegt also auf der dem Antriebsaggregat zugewandten Seite einer Trennkupplung beziehungsweise Anfahrkupplung vor. Entsprechend tritt die eingangs erwähnte Geräuschbildung lediglich während eines Startvorgangs und eines Stoppvorgangs des Antriebsaggregats auf, welche im Allgemeinen sehr kurz sind. Die Eigenstabilisierung der Pendelmasse wird folglich schnell erreicht. Beispielsweise beträgt die Grenzdrehzahl, bis zu welcher die Geräuschbildung auftritt, 150 U/min.

Wird jedoch die Fliehkraftpendeleinrichtung auf der dem Rad zugewandten Seite der Trennkupplung beziehungsweise Anfahrkupplung angeordnet, so wird die Eigenstabilisierung erst ab einer bestimmten Grenzgeschwindigkeit des Kraftfahrzeugs erreicht. Bei langsamer Fahrt des Kraftfahrzeugs kann daher über einen langen Zeitraum die Geräuschbildung auftreten. Dies ist auch dann der Fall, wenn neben dem Antriebsaggregat ein weiteres Antriebsaggregat zugeordnet ist, welches permanent mit dem Rad wirkverbunden ist. In diesem Fall bilden beispielsweise das Antriebsaggregat und das weitere Antriebsaggregat eine Hybridantriebseinrichtung des Kraftfahrzeugs. Auch wenn nun das Kraftfahrzeug allein mit dem weiteren Antriebsaggregat angetrieben wird, also die Trennkupplung zu dem Antriebsaggregat geöffnet ist, kann es wiederum zu der beschriebenen Geräuschbildung kommen. Der Vorteil der vorstehend beschriebenen Fliehkraftpendeleinrichtung liegt insoweit speziell darin, dass es frei in dem Antriebsstrang anordenbar ist, ohne auf die dort vorliegenden Drehzahlen achten zu müssen, weil stets unterhalb der Grenzdrehzahl die Geräuschbildung durch das Festsetzen der Pendelmasse verringert oder verhindert wird und ab der Grenzdrehzahl eine zuverlässige Schwingungstilgung erzielt wird.

Die Erfindung wird nachfolgend anhand der in der Zeichnung dargestellten Ausführungsbeispiele näher erläutert, ohne dass eine Beschränkung der Erfindung erfolgt. Dabei zeigt
- Figur 1: eine schematische Darstellung eines Antriebsstrangs eines Kraftfahrzeugs mit wenigstens einer Fliehkraftpendeleinrichtung,
- Figur 2: einen Längsschnitt durch einen Bereich eines Antriebsaggregats des Antriebsstrangs; welchem die Fliehkraftpendeleinrichtung zugeordnet ist, und
- Figur 3: einen Querschnitt durch einen Bereich der Fliehkraftpendeleinrichtung.

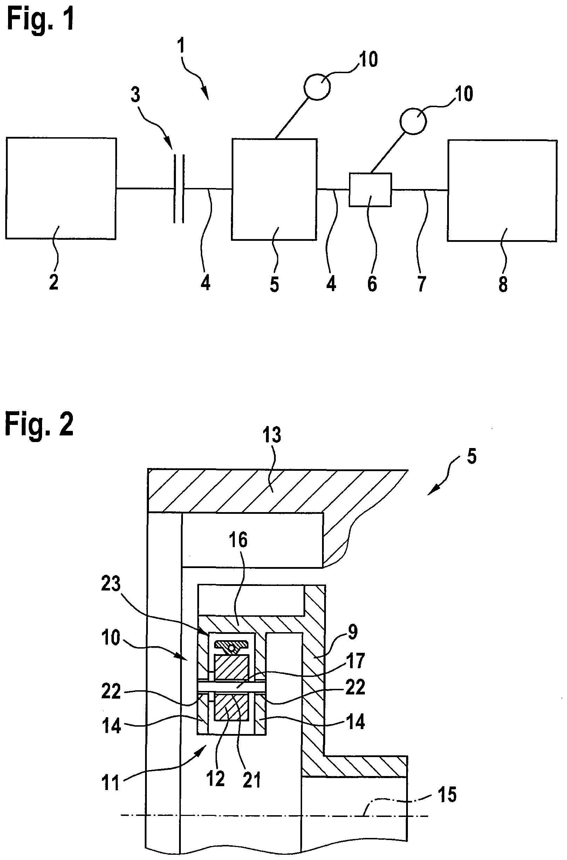

Die Figur 1 zeigt eine schematische Darstellung eines Antriebsstrangs 1 eines Kraftfahrzeugs. Dieser verfügt über ein Antriebsaggregat 2, welches in dem hier vorgestellten Ausführungsbeispiel als Brennkraftmaschine ausgebildet ist. Das Antriebsaggregat 2 ist über eine Trennkupplung 3 mit einer Welle 4 eines weiteren Antriebsaggregats 5, welches beispielsweise als Elektromotor vorliegt, wirkverbunden beziehungsweise wirkverbindbar. Auf der der Trennkupplung 3 abgewandten Seite des weiteren Antriebsaggregats 5 ist die Welle 4 an ein Getriebe 6, insbesondere ein Schaltgetriebe, angeschlossen. Die Welle 4 stellt auf der dem Getriebe 6 zugewandten Seite des Antriebsaggregats 5 mithin eine Getriebeeingangswelle dar. Eine Getriebeausgangswelle 7 ist mit wenigstens einem hier nicht dargestellten Rad eines Fahrwerks 8 eines Kraftfahrzeugs wirkverbunden. Es wird deutlich, dass das Aufbringen eines Drehmoments auf das Rad und mithin ein Antreiben des Kraftfahrzeugs sowohl allein mithilfe des weiteren Antriebsaggregats 5 als auch - durch Schließen der Trennkupplung 3 - mittels sowohl des Antriebsaggregats 2 als auch des Antriebsaggregats 5 erfolgen kann.

Einem hier nicht dargestellten Rotor 9 des Antriebsaggregats 5 kann zur Schwingungstilgung eine Fliehkraftpendeleinrichtung 10 zugeordnet sein, welche hier lediglich schematisch angedeutet ist. Alternativ oder zusätzlich kann auch dem Getriebe 6 die Fliehkraftpendeleinrichtung 10 zugeordnet sein. Die Fliehkraftpendeleinrichtung 10 verfügt über einen hier nicht dargestellten Pendelmassenträger 11 und wenigstens eine an diesem beweglich gelagerte Pendelmasse 12. Der Pendelmassenträger 11 ist für den Fall, dass er dem Antriebsaggregat 5 zugeordnet ist, drehfest mit der Welle 4 verbunden. Bei Zuordnung der Fliehkraftpendeleinrichtung 10 zu dem Getriebe 6, ist er beispielsweise entweder an die Welle 4, an die Getriebeausgangswelle 7 oder an eine weitere Welle des Getriebes 6 angeschlossen, also mit dieser wirkverbunden.

Die Figur 2 zeigt eine Längsschnittdarstellung eines Bereichs des weiteren Antriebsaggregats 5, welches als elektrische Maschine ausgebildet ist und insoweit über den Rotor 9 und einen Stator 13 verfügt. Der Pendelmassenträger 11 der Fliehkraftpendeleinrichtung 10 wird in diesem Fall beispielsweise von dem Rotor 9 zumindest bereichsweise gebildet. Er umfasst zwei Haltestege 14, die vorzugsweise in Umfangsrichtung (bezüglich einer Drehachse 15 des Pendelmassenträgers 11) durchgehend ausgeführt sind. Die Haltestege 14 ragen ausgehend von einem Verbindungssteg 16 in radialer Richtung nach innen, sodass sie auf ihren dem Verbindungssteg 16 abgewandten Seiten freie Enden aufweisen. Die Haltestege 14 sind in axialer Richtung voneinander beabstandet. Zwischen den Haltestegen 14 ist die wenigstens eine Pendelmasse 12 angeordnet, die mittels einer Achse 17 entlang einer hier nicht erkennbaren Laufbahn 18 bezüglich des Pendelmassenträgers 11 zwischen zwei in Umfangsrichtung voneinander beabstandeten Endanschlägen 19 und 20 (nicht erkennbar) verlagerbar gelagert ist.

Die Achse 17 durchgreift eine erste Führungsausnehmung 21 der Pendelmasse 12 sowie zweite Führungsausnehmungen 22 der Haltestege 14. Die Führungsausnehmungen 21 und 22 definieren gemeinsam die Laufbahn 18. Vorzugsweise sind die Führungsausnehmungen 21 und 22 in Umfangsrichtung bogenförmig, insbesondere zwischen den Endanschlägen 19 und 20 stetig bogenförmig, gekrümmt. Mithin verändert sich über den Verlauf der Führungsausnehmungen 21 und 22 in dieser Richtung ihr Abstand von der Drehachse 15. Die Krümmung der Führungsausnehmungen 22 ist dabei - in einem Querschnitt durch die Fliehkraftpendeleinrichtung 5 gesehen - bevorzugt gegensinnig zu der Krümmung der Führungsausnehmung 21. Die Fliehkraftpendeleinrichtung 10 verfügt weiterhin über eine Federeinrichtung 23, welche hier lediglich angedeutet ist. Die Federeinrichtung 23 ist dazu ausgebildet, die Pendelmasse 12 bei einer eine Grenzdrehzahl unterschreitenden Drehzahl des Pendelmassenträgers 11 um die Drehachse 15 in einen der Endanschläge 19 und 20 zu drängen.

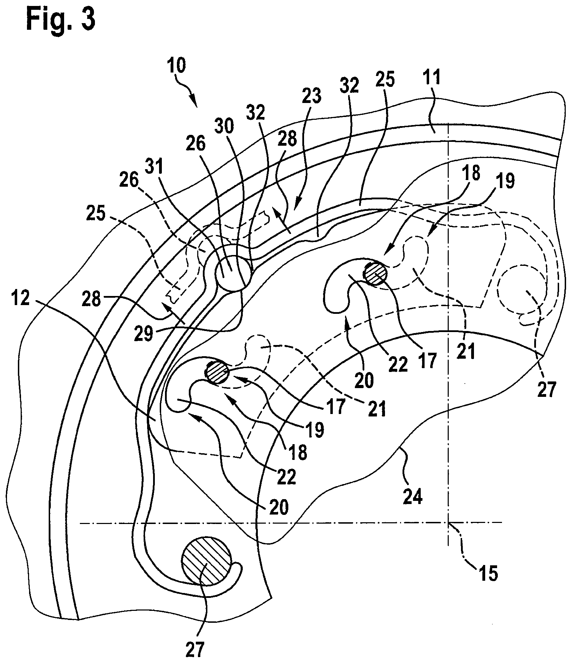

Die Figur 3 zeigt eine Querschnittdarstellung eines Bereichs der Fliehkraftpendeleinrichtung 10. Bezüglich der Zeichenebene hinten liegend ist der Pendelmassenträger 11 zu erkennen, während die wenigstens eine Pendelmasse 12 hinsichtlich der Zeichenebene vorne liegt. In einem durch die Linie 24 gekennzeichneten Bereich ist die Pendelmasse 12 lediglich angedeutet, sodass Details des Pendelmassenträgers 11 zu erkennen sind. Sichtbar sind insbesondere zwei zweite Führungsausnehmungen 22, welche in dem Pendelmassenträger 11 vorliegen. Vorzugsweise sind jeder Pendelmasse 12 zwei derartige zweite Führungsausnehmungen 22 zugeordnet, welche jeweils in beiden Haltestegen 14 vorliegen. Jeder dieser beiden zweiten Führungsausnehmungen 22 ist eine erste Führungsausnehmung 21 zugeordnet, welche hier jedoch nicht erkennbar ist.

Es wird deutlich, dass die zweiten Führungsausnehmungen 22 mit ihren beiden jeweiligen Enden auf die Drehachse 15 zu gekrümmt sind. Sie sind insoweit nierenförmig ausgestaltet. Auch die erste Führungsausnehmung 21 der Pendelmasse 12 ist bevorzugt nierenförmig, wobei jedoch - wie bereits ausgeführt - ihre Krümmung gegenläufig ist, sodass ihre Enden von der Drehachse 15 fort weisen. Die Drehachsen 17 sind jeweils sowohl in der ersten Führungsausnehmung 21 als auch der zweiten Führungsausnehmung 22 drehbar gelagert. Eine Verlagerung der Pendelmasse 12 bezüglich des Pendelmassenträgers 11 erfolgt daher entlang der von den Führungsausnehmungen 21 und 22 gemeinsam definierten Laufbahn 18. Es ist unmittelbar einsichtig, dass die Führungsausnehmungen 21 und 22 für jede Laufbahn 18 gemeinsam zwei Endanschläge 19 und 20 definieren, wobei die Pendelmasse 12 in der hier gewählten Darstellung in dem Endanschlag 19 vorliegt. Die Endanschläge 19 und 20 sind in Umfangsrichtung voneinander beabstandet. Die Laufbahn 18 ist nun derart ausgestaltet, dass die Pendelmasse 12, wenn sie an einem der Endanschläge 19 und 20 anliegt, in einer ersten Radialposition vorliegt, welche kleiner ist als eine zweite Radialposition, die die Pendelmasse 12 einnimmt, wenn sie nicht an den Endanschlägen 19 beziehungsweise 20 anliegt.

Dargestellt ist ebenso die Federeinrichtung 23, welche in dem hier vorgestellten Ausführungsbeispiel aus einem Federelement 25 und einem Gewicht 26 besteht. Das Federelement 25 ist an zwei Bolzen 27 aufgehängt, welche an dem Pendelmassenträger 11 befestigt sind. Entsprechend ist das Federelement 25 zumindest in geringem Umfang bezüglich des Pendelmassenträgers 11 drehbar, wobei die Lagerung an den Bolzen 27 insbesondere im Sinne eines Festlagers ausgeführt ist. Die Federeinrichtung 23 beziehungsweise das Federelement 25 sind derart ausgeführt, dass bei einer Drehzahl des Pendelmassenträgers 11 um die Drehachse 15, welche kleiner ist als eine Grenzdrehzahl, eine erste Stellung vorliegt. Wird dagegen die Grenzdrehzahl von der Drehzahl des Pendelmassenträgers 11 erreicht oder überschritten, so bewirkt ein Fliehkrafteinfluss auf das Gewicht 26 eine Verlagerung des Gewichts 26 entgegen einer von dem Federelement 25 bewirkten Federkraft. Dies ist durch die Pfeile 28 dargestellt. Ebenso ist die nun vorliegende Position des Federelements 25 und des Gewichts 26 mit gestrichelten Linien angedeutet.

An dem Gewicht 26 ist ein Kontaktbereich 29 vorgesehen, welcher mit einem Gegenkontaktbereich 30 der Pendelmasse 12 in Berührkontakt treten kann, wenn eine entsprechende Anordnung von Gewicht 26 und Pendelmasse 12 zueinander vorliegt. Der Kontaktbereich 29 weist ein Rastelement 31 und der Gegenkontaktbereich 30 beziehungsweise die Pendelmasse 12 ein Rastgegenelement 32 auf. Das Rastelement 31 ist bevorzugt als Vorsprung und das Rastgegenelement 32 als Rastelementaufnahme, also als an das Rastelement 31 formangebrachte Vertiefung ausgebildet. Die Pendelmasse 12 weist mehrere Rastgegenelemente 32 auf, wobei jedem Endanschlag 19 und 20 eines dieser Rastgegenelemente 32 zugeordnet ist. Das Rastelement 31 und die Rastgegenelemente 32 sind derart angeordnet, dass bei Vorliegen der Pendelmasse 12 in dem Endanschlag 19 das Rastelement 31 in einem ersten der Rastgegenelemente 32 und bei Anliegen an dem Endanschlag 20 in einem weiteren der Rastgegenelemente 32 angeordnet ist. Entsprechend wird durch das formschlüssige Eingreifen des Rastelements 31 in das jeweilige Rastgegenelement 32 ein zuverlässiges Halten der Pendelmasse 12 an beziehungsweise in dem jeweiligen Endanschlag 19 beziehungsweise 20 erzielt.

Das Federelement 25 ist nun derart ausgebildet, dass der Kontaktbereich 29 beziehungsweise das Rastelement 31 bei der die Grenzdrehzahl unterschreitenden Drehzahl des Pendelmassenträgers 11 in Richtung einer Radialhalteposition gedrängt wird, welche in der gewählten Darstellung durch die durchgezogenen Linien angedeutet ist. In dieser Radialhalteposition wird die Pendelmasse 12 mit einer in Richtung der ersten Radialposition weisenden Federkraft beaufschlagt, sodass sie in Richtung eines der Endanschläge 19 beziehungsweise 20 gedrängt wird. Ist der jeweilige Endanschlag 19 beziehungsweise 20 erreicht, greift das Rastelement 31 in das entsprechende Rastgegenelement 32 ein. Nachfolgend ist die Pendelmasse 12 zuverlässig gegen Verlagerung gesichert und wird in den Endanschlag 19 beziehungsweise 20 gedrängt. Auf diese Art und Weise werden unerwünschte Verlagerungen der Pendelmasse 12 bezüglich des Pendelmassenträgers 11, welche unerwünschte Geräusche hervorrufen können, zuverlässig vermieden.

Erreicht dagegen die Drehzahl des Pendelmassenträgers 11 die Grenzdrehzahl oder überschreitet diese, so wird das Gewicht 26 und mithin der Kontaktbereich 29 entgegen der Federkraft des Federelements 25 in Richtung der Pfeile 28 in eine Radialfreigabeposition verlagert, welche mit gestrichelten Linien angedeutet ist. In dieser Radialfreigabeposition ist der Kontaktbereich 29 beziehungsweise das Rastelement 31 derart angeordnet, dass sich die Pendelmasse 12 entlang der Laufbahn 18 frei bewegen kann. Entsprechend wird nun eine zuverlässige Schwingungstilgung erzielt.

Selbstverständlich sind zahlreiche Variationen der vorstehend beschriebenen Fliehkraftpendeleinrichtung 10 realisierbar. So kann sie beispielsweise anstelle dem Antriebsaggregat 5 oder dem Getriebe 6 einem Schwingungstilger, insbesondere einem drehzahlalternativen Schwingungstilger, zugeordnet sein, welcher zur Schwingungstilgung wenigstens ein Federelement aufweist. Auch kann selbstverständlich eine alternative Art der Lagerung der Pendelmasse 12 an dem Pendelmassenträger 11 vorgesehen sein. Beispielsweise ist lediglich ein Haltesteg 14 vorgesehen, an welchem auf beiden Seiten jeweils eine Pendelmasse 12 vorliegt. Von Bedeutung ist dabei zunächst lediglich, dass die Federeinrichtung 23 vorliegt, welche bei der die Grenzdrehzahl unterschreitenden Drehzahl des Pendelmassenträgers 11 die Pendelmasse 12 in beziehungsweise an einen der Endanschläge 19 beziehungsweise 20 drängt, sodass die Pendelmasse 12 arretiert und mithin die unerwünschte Geräuschbildung zuverlässig vermieden wird.

### BEZUGSZEICHENLISTE

- 1: Antriebsstrang
- 2: Antriebsaggregat
- 3: Trennkupplung
- 4: Welle
- 5: Weiteres Antriebsaggregat
- 6: Getriebe
- 7: Getriebeausgangswelle
- 8: Fahrwerk
- 9: Rotor
- 10: Fliehkraftpendeleinrichtung
- 11: Pendelmassenträger
- 12: Pendelmasse
- 13: Stator
- 14: Haltesteg
- 15: Drehachse
- 16: Verbindungssteg
- 17: Achse
- 18: Laufbahn
- 19: Endanschlag
- 20: Endanschlag
- 21: 1. Führungsausnehmung
- 22: 2. Führungsausnehmung
- 23: Federeinrichtung
- 24: Linie
- 25: Federelement
- 26: Gewicht
- 27: Bolzen
- 28: Pfeil
- 29: Kontaktbereich
- 30: Gegenkontaktbereich
- 31: Rastelement
- 32: Rastgegenelement

## Patentansprüche

1. Fliehkraftpendeleinrichtung (10) mit einem um eine Drehachse (15) drehbaren Pendelmassenträger (11), mit wenigstens einer Pendelmasse (12), die entlang einer Laufbahn (18) beweglich zwischen zwei bezüglich der Drehachse (15) in Umfangsrichtung voneinander beabstandeten Endanschlägen (19,20) an dem Pendelmassenträger (11) gelagert ist, sowie mit einer Federeinrichtung (23), die dazu ausgebildet ist, die Pendelmasse (12) bei einer eine Grenzdrehzahl unterschreitenden Drehzahl des Pendelmassenträgers (11) um die Drehachse (15) in einen der Endanschläge (19,20) zu drängen, wobei die Laufbahn (18) derart ausgestaltet ist, dass die Pendelmasse (12) bei Anliegen an einem der Endanschläge (19,20) bezüglich der Drehachse (15) in einer ersten Radialposition und beabstandet von den Endanschlägen (19,20) in einer zweiten, größeren Radialposition vorliegt, wobei die Federeinrichtung (23) ein Federelement (25) mit einem Kontaktbereich (29) aufweist, wobei das Federelement (25) derart ausgebildet ist, dass der Kontaktbereich (29) bei der die Grenzdrehzahl unterschreitenden Drehzahl in Richtung einer Radialhalteposition gedrängt wird, um die Pendelmasse (12) mit einer in Richtung einer ersten Radialposition weisenden Federkraft zu beaufschlagen, und bei einer Drehzahl, die größer oder gleich der Grenzdrehzahl ist, durch Fliehkrafteinfluss in einer Radialfreigabeposition vorliegt, **dadurch gekennzeichnet, dass** das Federelement (25) in Umfangsrichtung gesehen beidseitig des Kontaktbereichs (29) an dem Pendelmassenträger (11) gelagert ist.

2. Fliehkraftpendeleinrichtung nach Anspruch 1, **dadurch gekennzeichnet, dass** die Federeinrichtung (23) die Pendelmasse (12) bei der die Grenzdrehzahl unterschreitenden Drehzahl in radialer Richtung nach innen, insbesondere in die erste Radialposition, drängt.

3. Fliehkraftpendeleinrichtung nach einem der vorhergehenden Ansprüche, **dadurch gekennzeichnet, dass** der Kontaktbereich (29) ein Rastelement (31) und die Pendelmasse (12) wenigstens ein Rastgegenelement (32) aufweist, die zumindest bei Vorliegen des Kontaktbereichs (29) in der Radialhalteposition zum Festsetzen der Pendelmasse (12) bezüglich des Pendelmassenträgers (11) in Umfangsrichtung formschlüssig miteinander zusammenwirken.

4. Fliehkraftpendeleinrichtung nach Anspruch 3, **dadurch gekennzeichnet, dass** die Pendelmasse (12) mehrere Rastgegenelemente (32) aufweist, wobei jedem Endanschlag (19,20) eines dieser Rastgegenelemente (32) zugeordnet ist.

5. Fliehkraftpendeleinrichtung nach einem der Ansprüche 3 und 4, **dadurch gekennzeichnet, dass** das Rastelement (31) und das Rastgegenelement (32) derart angeordnet sind, dass sie formschlüssig zum Halten der Pendelmasse (12) miteinander zusammenwirken, wenn der Kontaktbereich (29) in der Radialhalteposition angeordnet ist und die Pendelmasse (12) an dem, dem Rastgegenelement (32) zugeordneten Endanschlag (19,20) anliegt.

6. Fliehkraftpendeleinrichtung nach einem der Ansprüche 3 bis 5, **dadurch gekennzeichnet, dass** das Federelement (25) ein den Fliehkrafteinfluss bewirkendes Gewicht (26) aufweist, wobei der Kontaktbereich (29) und/oder das Rastelement (31) an dem Gewicht (26) ausgebildet sind.

7. Fliehkraftpendeleinrichtung nach einem der vorhergehenden Ansprüche, **dadurch gekennzeichnet, dass** das Federelement (25) in Umfangsrichtung gesehen beidseitig des Kontaktbereichs (29) an dem Pendelmassenträger (11) drehbar gelagert ist.

8. Antriebsstrang (1) eines Kraftfahrzeugs, mit einem Antriebsaggregat (2) und wenigstens einem mittels des Antriebsaggregats (2) antreibbaren Rad, **gekennzeichnet durch** eine Fliehkraftpendeleinrichtung (10), insbesondere einer permanent mit dem Rad wirkverbundenen Fliehkraftpendeleinrichtung (10), nach einem oder mehreren der vorhergehenden Ansprüche.

## Claims

1. Centrifugal force pendulum device (10) having a pendulum mass carrier (11) rotatable about an axis of rotation (15), having at least one pendulum mass (12) which is mounted on the pendulum mass carrier (11) in a manner movable along a track (18) between two end stops (19,20) spaced from one another with respect to the axis of rotation (15) in a circumferential direction, and having a spring device (23) which is designed to force the pendulum mass (12) about the axis of rotation (15) against one of the end stops (19,20) in the case of a rotation rate of the pendulum mass carrier (11) undershooting a threshold rotation rate, wherein the track (18) is designed such that the pendulum mass (12) when abutting on one of the end stops (19,20) with respect to the axis of rotation (15) is present in a first radial position, and spaced from the end stops (19,20) is present in a second, larger radial position, wherein the spring device (23) has a spring element (25) having a contact region (29), wherein the spring element (25) is designed such that the contact region (29) is forced in the direction of a radial holding position when the rotation rate undershoots the threshold rotation rate, in order to apply a spring force, pointing in the direction of a first radial position, to the pendulum mass (12), and in the case of a rotation rate which is greater than or equal to the threshold rotation rate, is present in a radial release position by means of centrifugal force influence, **characterised in that** the spring element (25) viewed in circumferential direction is supported on both sides of the contact region (29) on the pendulum mass carrier (11).

2. Centrifugal force pendulum device according to claim 1, **characterised in that** the spring device (23) forces the pendulum mass (12), when the rotation rate undershoots the threshold rotation rate, radially to the inside, in particular into the first radial position.

3. Centrifugal force pendulum device according to any of the preceding claims, **characterised in that** the contact region (29) has a latching element (31) and the pendulum mass (12) has at least one latching counter element (32) which at least in the presence of the contact region (29) in the radial holding position for fixing the pendulum mass (12) with respect to the pendulum mass carrier (11) interact in circumferential direction in a form-fitting manner with one another.

4. Centrifugal force pendulum device according to claim 3, **characterised in that** the pendulum mass (12) has several latching counter elements (32), wherein one of these latching counter elements (32) is assigned to each end stop (19,20).

5. Centrifugal force pendulum device according to any of claims 3 and 4, **characterised in that** the latching element (31) and the latching counter element (32) are disposed such that they interact with one another in a form-fitting manner for holding the pendulum mass (12) when the contact region (29) is disposed in the radial holding position and the pendulum mass (12) abuts on the end stop (19,20) assigned to the latching counter element (32).

6. Centrifugal force pendulum device according to any of claims 3 to 5, **characterised in that** the spring element (25) has a weight (26) applying the centrifugal force influence, wherein the contact region (29) and/or the latching element (31) are formed on the weight (26).

7. Centrifugal force pendulum device according to any of the preceding claims, **characterised in that** the spring element (25) viewed in circumferential direction is rotatably mounted on both sides of the contact region (29) on the pendulum mass carrier (11).

8. Drive train (1) of a motor vehicle, having a drive assembly (2) and at least one wheel drivable by means of the drive assembly (2), **characterised by** a centrifugal force pendulum device (10), in particular a centrifugal force pendulum device (10) permanently operationally connected with the wheel, according to one or several of the preceding claims.

## Revendications

1. Dispositif de pendule à force centrifuge (10) avec un support de masse pendulaire (11) rotatif autour d'un axe de rotation (15), avec au moins une masse pendulaire (12), qui est logée mobile le long d'une voie de roulement (18) entre deux butées finales (19,20) espacées l'une de l'autre par rapport à l'axe de rotation (15) dans la direction circonférentielle au niveau du support de masse pendulaire (11), ainsi qu'avec un dispositif de ressort (23), qui est réalisé pour contraindre la masse pendulaire (12) lorsqu'une vitesse de rotation du support de masse pendulaire (11) est inférieure à une vitesse de rotation limite autour de l'axe de rotation (15) dans une des butées finales (19,20), dans lequel la voie de roulement (18) est configurée de sorte que la masse pendulaire (12) est présente lors de l'application sur une des butées finales (19,20) par rapport à l'axe de rotation (15) dans une première position radiale et espacée des butées finales (19,20) dans une deuxième position radiale plus grande, dans lequel le dispositif de ressort (23) présente un élément formant ressort (25) avec une zone de contact (29), dans lequel l'élément formant ressort (25) est réalisé de sorte que la zone de contact (29) est contrainte lorsque la vitesse de rotation est inférieure à la vitesse de rotation limite en direction d'une position de retenue radiale, pour solliciter la masse pendulaire (12) avec une force du ressort dirigée en direction d'une première position radiale, et est présente dans le cas d'une vitesse de rotation, qui est supérieure ou égale à la vitesse de rotation limite, par effet de force centrifuge dans une position de libération radiale, **caractérisé en ce que** l'élément formant ressort (25) est logé vu dans la direction circonférentielle des deux côtés de la zone de contact (29) au niveau du support de masse pendulaire (11).

2. Dispositif de pendule à force centrifuge selon la revendication 1, **caractérisé en ce que** le dispositif de ressort (23) contraint la masse pendulaire (12) lorsque la vitesse de rotation est inférieure à la vitesse de rotation limite dans une direction radiale vers l'intérieur, en particulier dans la première position radiale.

3. Dispositif de pendule à force centrifuge selon l'une quelconque des revendications précédentes, **caractérisé en ce que** la zone de contact (29) présente un élément d'arrêt (31) et la masse pendulaire (12) présente au moins un contre-élément d'arrêt (32), qui coopèrent l'un avec l'autre par complémentarité de forme au moins en présence de la zone de contact (29) dans la position de retenue radiale pour la fixation de la masse pendulaire (12) par rapport au support de masse pendulaire (11) dans la direction circonférentielle.

4. Dispositif de pendule à force centrifuge selon la revendication 3, **caractérisé en ce que** la masse pendulaire (12) présente plusieurs contre-éléments d'arrêt (32), dans lequel un de ces contre-éléments d'arrêt (32) est associé à chaque butée finale (19,20).

5. Dispositif de pendule à force centrifuge selon l'une quelconque des revendications 3 et 4, **caractérisé en ce que** l'élément d'arrêt (31) et le contre-élément d'arrêt (32) sont agencés de sorte qu'ils coopèrent l'un avec l'autre par complémentarité de forme pour retenir la masse pendulaire (12), lorsque la zone de contact (29) est agencée dans la position de retenue radiale et la masse pendulaire (12) s'applique sur la butée finale (19,20) associée au contre-élément d'arrêt (32).

6. Dispositif de pendule à force centrifuge selon l'une quelconque des revendications 3 à 5, **caractérisé en ce que** l'élément formant ressort (25) présente un poids (26) provoquant l'effet de force centrifuge, dans lequel la zone de contact (29) et/ou l'élément d'arrêt (31) sont réalisés au niveau du poids (26).

7. Dispositif de pendule à force centrifuge selon l'une quelconque des revendications précédentes, **caractérisé en ce que** l'élément formant ressort (25) est logé rotatif vu dans la direction circonférentielle des deux côtés de la zone de contact (29) au niveau du support de masse pendulaire (11).

8. Chaîne cinématique (1) d'un véhicule automobile, avec un groupe d'entraînement (2) et au moins une roue pouvant être entraînée au moyen du groupe d'entraînement (2), **caractérisée par** un dispositif de pendule à force centrifuge (10), en particulier un dispositif de pendule à force centrifuge (10) relié fonctionnellement à la roue de manière permanente, selon une ou plusieurs des revendications précédentes.
